# EUROPEAN PATENT APPLICATION

(11) **EP 1 790 894 A1**
(43) Date of publication of application: **30.05.2007**
(21) Application number: 06124176.6
(22) Date of filing: 16.11.2006
(51) Int. Cl.: F16L 3/22, B66C 13/22

(54) **Retention device for hydraulic hoses**

(30) Priority: 29.11.2005 US 288928
(71) Applicant: CNH Italia S.p.A., 41100 Modena (IT)
(72) Inventor: Martinez, David V., Fort Madison, IA 52627 (US); Schupback, Jesse L., Burlington, IA 52601 (US)
(74) Representative: CNH IP Department

(57) **Abstract**

A hydraulic hose retention device (138, 238, 292) for a work vehicle (100) is disclosed. The device (138, 238, 292) includes an elastomeric body (154, 254, 294) having apertures (174, 176, 274, 326-340). Slots between the apertures and the side wall of the body have opposing sides (178, 180, 278, 280) that can flex apart to support a plurality of hydraulic hoses (130). A securing assembly (158, 258, 295) secures the hydraulic hoses (130) in place.

## Description

The invention relates generally to work vehicles such as backhoes having hydraulic actuators coupled to hydraulic hoses to supply the actuators with working fluid. More particularly, it relates to retaining devices for fixing these hydraulic hoses together to reduce wear.

Loader backhoes and other work vehicles typically use hydraulic actuators to affect movement of the vehicle itself and the various implements that are attached thereto. These hydraulic actuators include rotary actuators such as hydraulic motors and linear actuators such as hydraulic cylinders.

These rotary actuators are connected by hydraulic hoses to hydraulic pumps on the vehicle that provide them with hydraulic fluid. Often, the hydraulic actuators are located on members such as loader arms, loader buckets, booms, dippers, and swing towers that are pivotally coupled to the chassis or other structures of the vehicle. The hydraulic hoses must be able to flex. By flexing they accommodate the motion of the various structures on the work vehicle. They cannot easily be made solid and fixed rigidly to the surface of the structures.

The flexible hoses typically have an outer diameter of between one half and two inches. They are often disposed immediately adjacent to each other, and often rub, one against the other, as the structures to which they are attached pivot back and forth. This rubbing causes significant wear over time.

One particular problem area on vehicles with backhoe attachments is the area around the swing tower. The swing tower is the portion of a backhoe attachment that is pivotally coupled to the chassis of the loader backhoe tractor to pivot about a vertical axis, and to which the backhoe boom is pivotally coupled to pivot about a generally horizontal axis. Swing towers are typically large structures that extend backward from the chassis of the tractor for about two feet. They have a wide range of swing of about 120-150° about a vertical axis. Furthermore, there can be 8-12 hydraulic hoses disposed adjacent to one another that pass through the swing tower. This means that all 8-12 hydraulic hoses are regularly bent back and forth 120-150° as the operator uses the backhoe. Unless the hydraulic hoses are carefully fixed with respect to each other and with respect to the swing tower, they will rub against each other and cause considerable wear and premature failure.

To prevent this, a special retention device has been provided that will hold all the hydraulic hoses in the fixed relationship with respect to each other yet permit them to flex as the swing tower pivots back and forth. By holding them in a fixed relationship with respect to each other, they are not permitted to rub each other, and thus wear is substantially reduced.

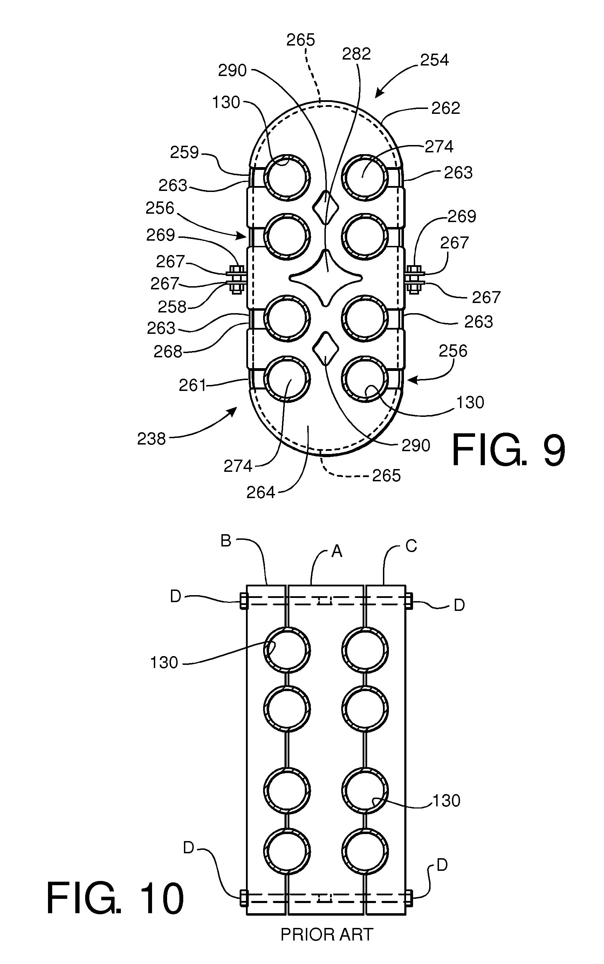

A simple example of a prior art retention device is shown in FIGURE 10 herein. In this FIGURE, a central bar A is fixed to two outer bars B, C with the fasteners D. The fasteners extend through bars B, C into bar A and are tightened. This creates a rigid structure having several (in this case, eight) circular apertures, each aperture being configured to support a hydraulic hose. The apertures are disposed vertically in a four rows by two columns in the block.

The swing tower pivots to the left and right about a generally vertical pivotal axis with respect to the tractor chassis. The retention device is preferably disposed along this vertical axis. By locating the retention device along the pivotal axis, the stresses on the hoses can be minimized.

There are drawbacks to the prior art retention device arrangement shown in FIGURE 10, however. The hoses are large and stiff, typically having a diameter of one inch or more. They are thick-walled, in order to handle hydraulic fluid pressures on the order of 2500 psi. The stiff hoses are difficult to manipulate and position. In order to assemble the prior art retention device, four hydraulic hoses must be simultaneously placed in semicircular grooves in bar A. The operator must hold all hydraulic hoses in these grooves while placing bar B on top of the hydraulic hoses, thus enclosing the hoses in a vertical column of circular apertures. Then, while holding bar B firmly on top of bar A, the operator must manage to thread fasteners D into their holes on either end of bar B. This is difficult since any slackening of pressure on bars A and B will cause the ends of bars A and B to spread apart and become misaligned. Once bars A and B are assembled, the operator must go to the other side of the vehicle and repeat the process with another four hydraulic hoses and bar C.

The process of assembling the prior art retention device is therefore slow, tedious, and difficult. It is prone to misalignment and misthreading. Furthermore, because bars A, B, and C are typically made of steel, the prior art retention device is relatively expensive, as well.

It is an object of the present invention to provide a hydraulic hose retention device for a backhoe swing tower that is easier to assemble.

According to the present invention a hydraulic hose retention device according to claim 1 is provided.

The device comprises an elastomeric body comprising a front and a rear face, at least one side wall and a number of apertures to receive hydraulic hoses; the body further comprises slots between the apertures and the side walls. The slots may further comprise opposing sides able to flex apart to insert hoses one by one. The device may further comprise a securing assembly, including one or more elongated members and one or more fasteners. The securing assembly may further be fixed over the slots to retain the hoses in the apertures. The sidewall of the body may have a recess to position the securing assembly. The width of the slots may be between 20% and 80% of the diameter of the apertures.

The invention will now be described in further detail, by way of example, with reference to the accompanying drawings, in which:
FIGURE 1 illustrates a loader-backhoe having a backhoe attachment including a swing tower and a plurality of hydraulic hoses extending through the swing tower that are fixed together by a hydraulic hose retention device;
FIGURE 2 is a close-up view of the swing tower of FIGURE 1 showing the hydraulic hose retention device in position on the hydraulic hoses extending between the backhoe attachment and the tractor;
FIGURE 3 is a perspective view of the hydraulic hose retention device of FIGURES 1-2 showing the elastomeric body of the hydraulic hose retention device, its slotted apertures for receiving individual hydraulic hoses, and its peripheral groove configured to support a securing assembly;
FIGURE 4 is a plan view of the elastomeric body of FIGURES 1-3 showing the slotted apertures for receiving hydraulic hoses;
FIGURE 5 is a side cross-sectional view of the elastomeric body of FIGURES 1-4 taken at section line 5-5 in FIGURE 4 and showing two slots in greater detail;
FIGURE 6 is a perspective view of an alternative hydraulic hose retention device having an elongated configuration instead of the circular configuration shown in FIGURES 1-5 above;
FIGURE 7 is a plan view of the hydraulic hose retention device of FIGURE 6 showing the circular shape of the elastomeric body and the equidistantly spaced slotted apertures disposed about the periphery of the body for receiving hydraulic hoses;
FIGURE 8 is a side view of the hydraulic hose retention device of FIGURES 6-7;
FIGURE 9 is a plan view of the hydraulic hose retention device of FIGURES 6-8 assembled with hydraulic hoses shown in cross-section in each of the apertures for receiving hydraulic hoses, with a securing assembly extending around the entire periphery of the outer edge, and with the fasteners which secure ends of the securing assembly together;
FIGURE 10 illustrates a prior art hydraulic hose retention device; and
FIGURE 11 is a perspective view of a third hydraulic hose retention device.

In the drawings, like reference numerals refer to like parts throughout the several views.

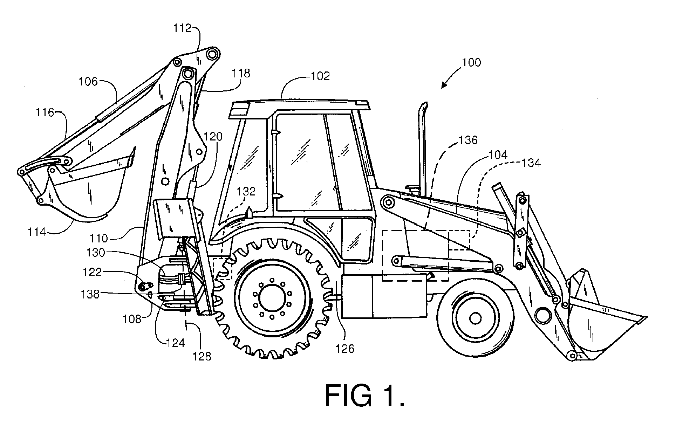

Referring now to FIGURE 1, a loader backhoe 100 includes a tractor 102, a loader implement 104 pivotally coupled to the front of tractor 102, and a backhoe implement 106 pivotally coupled to the rear of tractor 102. Implement 106 includes a swing tower 108, a boom 110, a dipper 112, and a bucket 114. A hydraulic actuator called a bucket cylinder 116 is pivotally coupled to and between bucket 114 and dipper 112 to pivot the bucket with respect to the dipper about a horizontal axis. A hydraulic actuator called a dipper cylinder 118 is pivotally coupled to and between dipper 112 and boom 110 to pivot the dipper with respect to the boom about a horizontal axis. A hydraulic actuator called a boom cylinder 120 is coupled to and between the boom 110 and swing tower 108 to pivot the boom with respect to the swing tower about a horizontal axis 122. Hydraulic actuators called boom swing cylinders 124 are coupled to and between swing tower 108 and chassis 126 of tractor 102 to pivot swing tower 108 with respect to chassis 126 about a vertical axis 128.

Hydraulic hoses 130 extend between control valves 132 and cylinders 116, 118, 120, 124. Control valves 132 regulate the flow of hydraulic fluid to and from cylinders 116, 118, 120, 124 and pump 134. Pump 134 is coupled to and driven by engine 136. Hydraulic hoses 130 are fixed together with a hydraulic hose retention device 138 disposed in swing tower 108.

Each of the hydraulic cylinders 116, 118, 120, 124 has an extend port and a retract port that are configured to extend and retract the cylinder, respectively. A separate hydraulic hose is fixed to each of these ports. Eight hydraulic hoses are therefore required to communicate hydraulic fluid under pressure to and from the cylinders. Hydraulic hoses 130 include these eight hydraulic hoses. In addition, hydraulic hoses 130 may include additional hydraulic hoses or pneumatic lines for additional hydraulic actuators disposed on backhoe implement 106. For example, pneumatic or hydraulic pavement breakers, grippers, or other implements may be fixed to the end of backhoe attachment 106. These devices are powered by hydraulic fluid or compressed air that is carried by additional hydraulic hoses or pneumatic lines that are a part of hydraulic hoses 130.

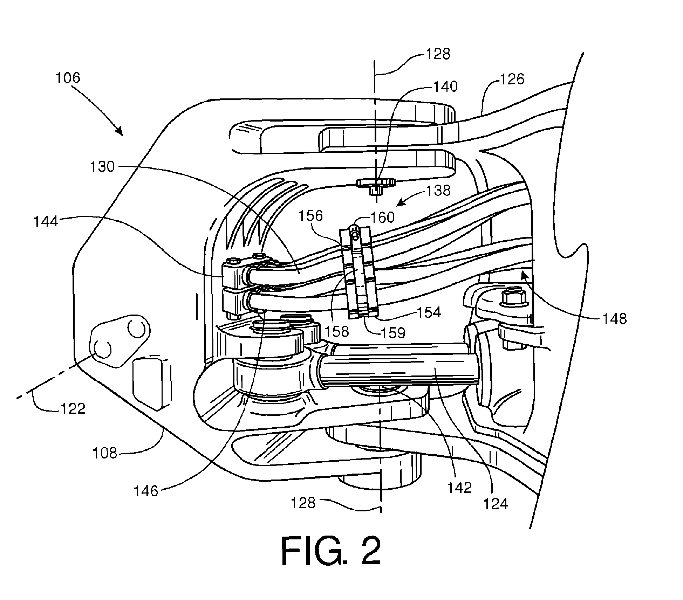

Referring now to FIGURE 2, swing tower 108 is shown pivotally coupled to chassis 126 by pivot pins 140, 142. The pivot pins define a substantially vertical pivotal axis 128 about which swing tower 108 pivots with respect to chassis 126. Hydraulic hoses 130 pass through the pivotal axis 128. They are fixed together with hydraulic hose retention device 138, which is disposed on axis 128 and floats in the open region between the upper and lower pivot joints formed by pins 140, 142.

Swing tower 108 includes a manifold 144 to which hydraulic hoses 130 are fixed. This manifold orients one end of the hydraulic hoses in a horizontal array 146, four hydraulic hoses wide by two hydraulic hoses high. It also orients the hydraulic hoses to point forward toward pivotal axis 128. The other ends of the hydraulic hoses 130 extend from control valves 132 (FIG. 1). These valves are fixed to chassis 126 and also orient hydraulic hoses 130 in a horizontal array 148, four hoses wide by two hoses high. Valves 132 also direct the ends of hydraulic hoses 130 to point backward toward pivotal axis 128.

Since both front and rear ends of hydraulic hoses 130 are arranged in a four hose wide by two hose high horizontal array rather than in a two wide by four high vertical array, considerable flexing and mutual rubbing of the hydraulic hoses would occur as the swing tower pivots were it not for the hydraulic hose retention device 138. Retention device 138 reduces this rubbing by fixing hydraulic hoses 130 in a more vertical orientation (i.e. a circle of ten hydraulic hoses) than they are arranged at each end (i.e. in the horizontal four wide by two high arrays 146, 148).

Hydraulic hose retention device 138 includes an elastomeric body 154 with slots 156 and a securing assembly 158.

The securing assembly 158 comprises a hose clamp that further comprises an elongated member, here shown as a metal band 159, and a fastener, here shown as screw 160. The fastener is adjustable to selectively vary the tension in the band. The band itself is preferably flexible so it can be wrapped about the periphery of the body and its ends brought together to form a continuous loop extending about the periphery of body 154. The ends of band 159 are fixed together with screw 160 thus holding band 159 around the circumference of body 154, covering slots 156 and retaining hoses 130 in body 154.

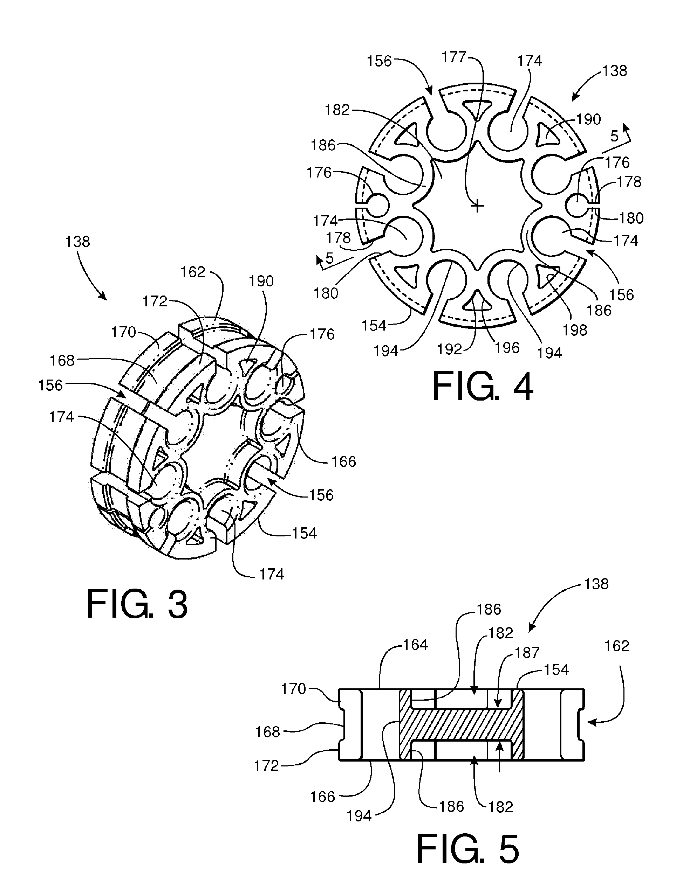

FIGURES 3-5 illustrate the elastomeric body 154 of device 138 with the securing assembly 158 and hydraulic hoses 130 removed. Body 154 has a plurality of slots 156 disposed along its outer surface. The slots are oriented in a direction parallel to the longitudinal extent of the hydraulic hoses 130 (FIGS. 1-2). Each of these slots 156 opens into a generally circular large diameter aperture 174 or a generally circular smaller diameter aperture 176. Each aperture 174, 176 is configured to receive and support an individual hydraulic hose.

Elastomeric body 154 is preferably circular, planar, and in the general form of a hockey puck. It preferably has a hardness (Durometer) of at least 50 and less than 90. More preferably it has a hardness (Durometer) of at least 60 and less than 82. Even more preferably it has a hardness (Durometer) of at least 65 and less than 77). It has a side wall 162 that extends around the entire circumference of body 154 and is generally perpendicular to front face 164 and rear face 166 (FIGS 3, 5).

Front face 164 and rear face 166 are parallel to each other. They are preferably spaced apart a distance equal to the thickness of the body 154, which is preferably between 0.5 inches and 2.5 inches, more preferably between 1.0 inch and 2.25 inches, and even more preferably between 1.25 inches and 2.0 inches.

A circumferential recess or groove 168 (FIGS 3, 5) is provided in side wall 162 that extends around the circumference of body 154. Groove 168 is defined by two shoulders 170, 172 in sidewall 162 that are of generally equal width and likewise extend around the circumference of body 154.

Body 154 preferably has an outside diameter of at least 4 and less than 7 inches. More preferably, the diameter is at least 4.5 and less than 6.5 inches. Even more preferably, the diameter is at least 5 and less than 6 inches.

The apertures 174, 176 are in the form of mutually parallel right circular cylindrical openings that extend completely through body 154 from front face 164 to rear face 166. These apertures include eight large apertures 174 for receiving larger diameter hydraulic hoses and two smaller hydraulic hose apertures 176 for receiving smaller diameter hydraulic hoses. Each of these apertures is configured to surround and support a hydraulic hose of hydraulic hoses 130. Apertures 174 have the same diameter since (in the preferred embodiment) apertures 174 are configured to support hydraulic hoses with the same outside diameter. All eight apertures 174 are spaced equidistantly or 45° apart, as measured from the center of body 154. The diameter of the apertures can vary depending upon the size of the hydraulic hoses they support, but are preferably slightly smaller than the diameter of their hydraulic hoses to ensure an interference fit between the hydraulic hose and its aperture. A loose fit would permit the hydraulic hoses to slide within retention device 138 and would cause wear.

Apertures 174 are preferably between 0.7 inches and 1.5 inches in diameter. More preferably they are between 0.8 inches and 1.25 inches in diameter. Even more preferably, they are between 0.9 inches and 1.1 inches in diameter. The smaller diameter apertures 176 are intended for use with smaller diameter hydraulic hoses or control lines, and therefore are smaller in diameter than larger apertures 174. The centers of all the apertures 174 are preferably disposed the same distance from the center 177 of body 154; the distance preferably being between 55% and 75% of the radius of body 154. The center of each aperture 174 is disposed a constant distance from side wall 162 of body 154, preferably between 25% and 45% of the radius of body 154.

Each slot 156 extends between each of the apertures 174, 176 and the side wall 162. Each slot preferably has a width less than the diameter of its associated aperture 174 or 176, and a width less than the diameter of the hydraulic hose inserted through the slot into its associated aperture 174 or 176. This smaller width permits the hydraulic hoses 130 to be inserted into the apertures during assembly one-by-one, and to be individually retained in place as the operator secures them in their respective apertures by covering slots 156 with securing assembly 158 (FIG. 2). The width of each slot is preferably 20% to 80% of the diameter of its associated aperture 156 and hydraulic hose 130.

In order to insert each hydraulic hose into its associated aperture, opposing sides 178, 180 (FIG. 4) of slots 156 must be elastically flexed apart to receive the hydraulic hose. Once the hydraulic hose is inserted through a slot 156 and into its associated aperture 174 or 176, the operator releases sides 178, 180 and permits them to relax and return to their original orientation, now holding hydraulic hose 130 in aperture 174 or 176, and (due to the slot width being less than the outside diameter of the hydraulic hose) preventing the hydraulic hose from being withdrawn as the operator places the securing assembly 158 about the periphery of body 154 and fixes assembly 158 in place.

This configuration, unlike that of the prior art, permits the operator to insert hydraulic hoses 130 one-at-a-time into their corresponding apertures 174, 176, until all of the hydraulic hoses have been inserted into body 154. Once the operator has inserted all of the hydraulic hoses, the operator wraps band 159 around the periphery of body 154 in groove 168 of side wall 162, and fixes its ends together with screw 160. Shoulders 170, 172 prevent band 159 from sliding off body 154. Once band 159 is in place, the operator can pivot swing tower 108 to its extreme right and its extreme left, confident that the tension on hydraulic hoses 130 cannot pull them out of body 154.

If body 154 was solid and had a thickness of (for example) 1.7 inches, it could be difficult for the operator to manually open each slot 156 and associated aperture 174, 176 far enough to receive its associated hydraulic hose. For this reason, a significant portion of front and back faces 164, 166 is recessed to provide a thinner region both in the center of body 154 and between each of the apertures 174.

Front and back faces 164, 166 have identical major recesses 182 (FIGS. 4-5) that extend downward from the face into the central region of body 154 to a preferred depth of between 15% and 35% of the overall body 154 thickness. More preferably the depth of these recesses is between 20% and 30% of the overall thickness of body 154. This leaves the central portion of the elastomeric body with a preferred thickness 187 (FIG. 5) of 30% to 70% of the overall thickness of the body.

The side wall of this recess is preferably not circular, but is star-shaped, having a series of points. The points are defined by the abutting ends of a series of convex arcs forming the side wall, each arc of the series having a center located inside an adjacent aperture 174 and at the center of the adjacent aperture 174.

This arrangement provides a thin inside curved wall portion 186 (FIGS. 4-5) for each aperture 174 having a generally constant wall thickness. Walls 186 preferably have a radial thickness of less than 30% of the diameter of the aperture they surround and of the diameter of the hydraulic hose supported in the aperture. Walls 186 can be more easily deflected outward away from the center of aperture 174 when hydraulic hose 130 is flexed, and therefore can function as a strain relief. Further, by providing recesses 182, the operator can more easily flex slots 156 open to insert the hydraulic hose 130.

Each face 164, 166 also has six minor recesses 190 (FIGS. 3-4) that are disposed between adjacent apertures 174. These minor recesses 190 extend downward from each face 164, 166 into a peripheral region of body 154 to a depth of between 15% and 35% of the overall body 154 thickness. More preferably they extend to a depth of between 20% and 30% of the overall body 154 thickness. Like major recesses 182, minor recesses 190 are also not circular. Recesses 190 preferably have three faces (FIG. 4), each face being generally parallel to and spaced a constant distance from another surface of body 154. First faces 192 are parallel to and spaced a constant distance from inner walls 194 of apertures 174. Second faces 196 are parallel to and spaced a constant distance from inner walls 194 of adjacent apertures 174. Third faces 198 are parallel to and spaced a constant distance from side walls 162 of body 154. Minor recesses 190 also provide strain relief for each of the adjacent apertures 174.

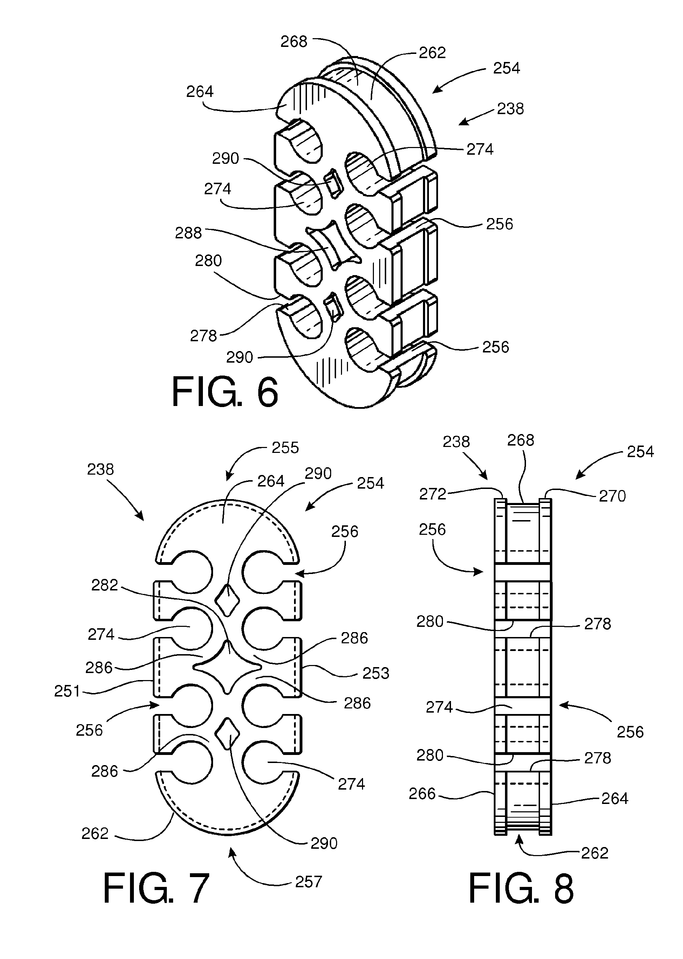

FIGURES 6-9 show a second embodiment of hydraulic hose retention device 138, identified in FIGURES 6-9 as hose retention device 238. FIGURES 6-8 illustrate the elastomeric body 254 of retention device 238. FIGURE 9 shows hydraulic hose retention device 238 complete, together with its constituent securing assembly 258 and body 254.

Body 254 is elongated with rounded (semi-circular) ends 255, 257 (FIG. 7) and two parallel elongated straight sides 251, 253 (FIG. 7). Sides 251, 253 are preferably spaced apart between 1.5 inches and 4 inches, more preferably between 1.75 inches and 3.5 inches and even more preferably between 2.0 inches and 3.25 inches. The overall length of body 254 is preferably between 4 inches and 12 inches. More preferably it is between 5 inches and 11 inches. Even more preferably it is between 6 inches and 10 inches.

Body 254 has a side wall 262 (FIGS. 6, 8) that extends around the entire periphery of body 254 and is generally perpendicular to front face 264 and rear face 266. Front face 264 and rear face 266 are parallel to each other and are preferably spaced apart a distance equal to the thickness of the body 254, which is preferably between 0.5 inches and 2.5 inches, more preferably between 1 inch and 2.25 inches, and even more preferably between 1.25 inches and 2 inches. A peripheral groove 268 (FIGS. 6, 8) formed in side wall 262 extends around the periphery of body 254. Groove 268 is defined by two shoulders 270, 272 of generally equal and constant width. Groove 268 and shoulders 270, 272 (FIG. 8) have a constant width over their entire length.

Elastomeric body 254 has eight hydraulic hose-receiving apertures 274 that extend completely through body 254 from front face 264 to rear face 266. Each of these apertures is configured to surround and support a hydraulic hose 130. The diameters of apertures 274 are preferably the same since each of apertures 274 is configured to support an identical hydraulic hose. The diameter of the apertures can vary depending upon the size of the hydraulic hoses they support, but are preferably slightly smaller than the diameter of their hydraulic hoses to provide an interference fit between each hydraulic hose and its aperture 274 when device 238 is assembled.

Apertures 274 are preferably between 0.7 and 1.5 inches in diameter. More preferably they are between 0.8 and 1.25 inches in diameter. Even more preferably, they are between 0.9 and 1.1 inches in diameter. The center of each aperture 274 is preferably disposed a constant distance from side wall 262 of body 254.

Each aperture 274 is in the form of a circle with a slot 256 on one side. Each of slots 256 preferably has a width less than the diameter of the aperture itself, and also less than the diameter of the hydraulic hose inserted through the slot into its associated aperture 274. The width of each slot is preferably between 20% and 80% of the diameter of its associated aperture and associated hydraulic hose 130.

Each slot 256 has a pair of opposing sides 278, 280 (FIGS 6, 8). In order to insert the hydraulic hoses into their associated apertures, the operator flexes opposing sides 278, 280 of slot 256 apart to widen the slot sufficient to pass its associated hydraulic hose therethrough. The operator then inserts the hydraulic hose 130 into associated aperture 274. The operator then releases opposing sides 278, 280, permitting them to relax and return to a closed position surrounding the hydraulic hose (shown in FIGS. 6-9). In this position, slot 256 is narrower than the diameter of both hydraulic hose 130 and aperture 274, and therefore holds the hydraulic hose 130 in place in body 254 until it can be secured with securing assembly 258. By providing for individual retention of each hydraulic hose in body 254, this configuration permits the operator to insert hydraulic hoses one-at-a-time into their corresponding apertures.

Referring to FIGURE 9, securing assembly 258 is disposed about the periphery of body 254, and is disposed in peripheral groove or recess 268 in body 254. Securing assembly 258 comprises two elongated members (here shown as two bands 259, 261) and two threaded fasteners 269 that fix the ends of the bands together to form a continuous loop extending about the entire periphery of the body. Band 259 extends about the upper half of elastomeric body 254. Band 261 extends about the lower half of elastomeric body 254. Bands 259, 261 are preferably U-shaped, are made of metal and are rigid. Each band 259, 261 has two straight, parallel, and facing end portions 263 that are coupled to an arcuate central portion 265 disposed between the end portions 263. Each band 259, 261 has two ends. Each of these ends includes a flange 267 which is disposed at a right angle to the rest of end portions 263 of bands 259, 261. Flanges 267 are disposed at the ends of end portions 263 and extend outward at right angles both from end portions 263 and from side wall 262 of body 254. Holes (not shown) are formed in each of flanges 267 to receive threaded fasteners 269. These fasteners fix flanges 267 of bands 259, 261 together on opposite sides of body 254, thus forming band 258 as a continuous loop extending around the entire periphery of body 254. Fasteners 269 are adjustable in length to draw adjacent flanges 267 closer together or farther apart, thereby permitting the operator to selectively vary the tension and length of the band.

Front and back faces 264, 266 (FIG. 8) of body 254 have identical major recesses 282 (FIG. 7, 9) that preferably extend downward from the face into the central region of body 254 to a depth of between 15% and 35% of the overall body 254 thickness. More preferably the depth is between 20% and 30% of the overall thickness of body 254. The recesses 282 define a recessed central portion 287 of the body having a thickness less than the overall thickness of the body 294.

The recesses 282 provide a thin inside curved wall portion 286 (FIG. 7) for each aperture 274 having a generally constant wall thickness. Walls 286 preferably have a thickness in a radial direction from the center of aperture 274 of less than 30% of both the diameter of the aperture and the diameter of the hydraulic hose supported in the aperture 274. Walls 286 can be more easily deflected outward away from the center of aperture 274 when hydraulic hose 130 is flexed, and therefore function as a strain relief. Further, by providing recesses 282, the operator can more easily flex slots 256 open to insert the hydraulic hose 130.

Each face 264, 266 also has two minor recesses 290 (FIG. 7) that are disposed on either side of major recesses 282. They preferably extend into the body between 15% and 35% of the overall thickness of body 254, and more preferably between 20% and 30% of the overall thickness of body 254. Recesses 290 have four faces and provide strain relief for each of the adjacent apertures 274.

The retaining device 238 of FIGURES 6-9 may be substituted for the device 138 of FIGURES 1-5 to fix the hydraulic hoses 130 together. It is oriented vertically when attached to the hydraulic hoses such that the apertures 274 are disposed in a two wide by four high array and retain all eight hydraulic hoses 130 with two auxiliary hydraulic hoses for the auxiliary devices discussed above with regard to FIGURES 1-3 being disposed in apertures 276.

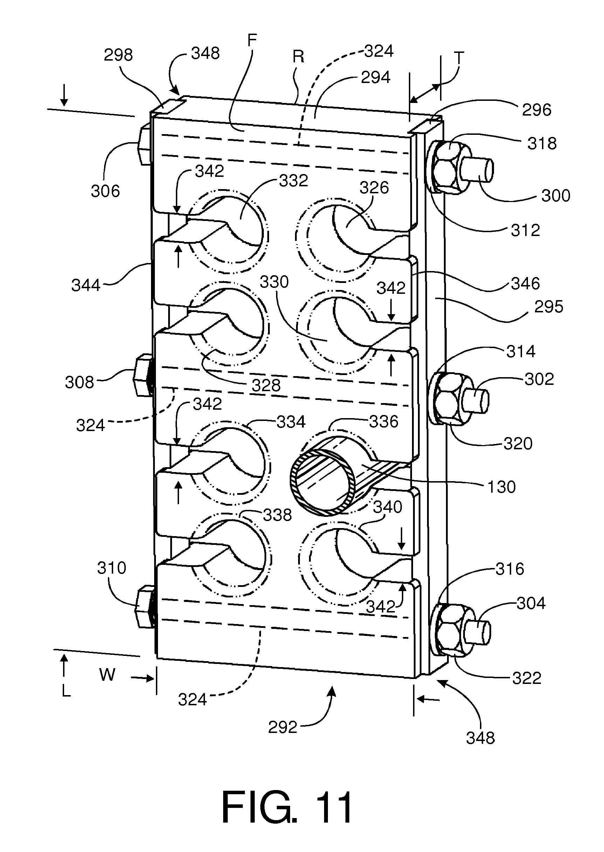

FIGURE 11 illustrates a third hydraulic hose retention device 292 comprising an elastomeric body 294 and a securing assembly 295. The body has a plurality of apertures, each aperture being configured to support a corresponding one of hydraulic hoses 130.

The securing assembly 295 preferably comprises two elongated rigid members 296, 298 and three elongated threaded fasteners 300, 302,304 that extend through members 296, 298 and through body 294. When tightened, the fasteners pull the members inward and the members compress elastomeric body 294 between them. Fasteners 300, 302,304 include bolts or screws 306, 308, 310; washers 312, 314, 316; and nuts 318, 320, 322, respectively.

The three fasteners 300, 302,304 extend, respectively, through three elongated and parallel holes 324. These three holes extend through the elastomeric body in a direction generally perpendicular to the longitudinal extent of body 294 (the "L" direction) and parallel to the width W of the body. One hole 324 extends through body 294 adjacent to the upper end of the body, one hole 324 extends through body 294 adjacent to the lower end of the body, and one hole 324 extends through body 294 at the midpoint of the body. Holes 324 are dimensioned slightly larger than the outer diameter of bolts 306, 308, 310 to permit these bolts to be inserted through the holes without interference.

Elastomeric body 294 is generally rectangular and elongated, having a thickness T, a width W, and a length L. L is greater than W which is greater than T. The preferred thickness of body 294 is between 0.5 and 1.5 inches. The preferred width of body 294 is between 2.5 inches and 5 inches. The preferred length of body 294 is between five inches and ten inches.

Body 294 preferably has a hardness (Durometer) of at least 50 and less than 90. More preferably it has a hardness (Durometer) of at least 60 and less than 82. Even more preferably it has a hardness (Durometer) of at least 65 and less than 77).

Eight circular and mutually parallel apertures 326, 328, 330, 332, 334, 336, 338, and 340 extend through body 294 parallel to its thickness T. The apertures extend between front face F and rear face R, joining the faces together. The apertures are organized as a rectangular two by four array. They are also organized as two parallel and equidistantly spaced columns of four apertures each. They are also organized as four parallel rows of two apertures each, with the two upper rows of apertures 326, 328, 330, 332 spaced the same distance apart as the two lower rows of apertures 334, 336, 338, 340. The apertures are divided into two blocks of four apertures such that four apertures 326, 328, 330, 332 are disposed between middle fastener 302 and upper fastener 300, and four apertures 334, 336, 338, 340 are disposed between middle fastener 302 and lower fastener 304.

The edge where each aperture joins the front F and rear R faces of body 294 is rounded, beveled or broken to provide strain relief for the hydraulic hoses supported inside the apertures. When the hydraulic hoses are bent, this rounded, beveled or broken edge reduces the stress concentrations on the hydraulic hose.

In the preferred embodiment, illustrated here, the apertures have the same diameter, preferably between 0.7 and 1.25 inches in diameter. The longitudinal axes of each aperture are parallel, and these axes are perpendicular to front face F and rear face R of body 294 and parallel to the longitudinal sidewalls 344, 346 of the body 294.

Each of the eight apertures has an associated slot 342 that extends between their associated aperture and the sidewalls of the body 294. The width of slots 342 is preferably 20% to 80% of the diameter of the aperture associated with each slot and also 20% and 80% of the outside diameter of the hydraulic hose received in that aperture. The width is preferably constant over substantially the entire length of the slots. The length of the slots in direction of width "W", which extends between the side wall and the aperture joined by the slot, is preferably the same for all the slots on one side of the body 294. It is also preferably the same for all slots on the other side of the body 294. The lengths of the slots on both sides of the body 294 are preferably the same.

Elongated members 296, 298 are preferably rigid, comprised of steel and are as long as body 294. Each member 296, 298 has holes that may be aligned coaxial with holes 324. It is through these holes that the fasteners are inserted.

The holes in the members 296, 298 are dimensioned such that the head of the fastener compresses the elongated members 296, 298 against body 294 preventing the slots 342 from being elastically flexed apart. This prevents the eight hydraulic hoses 130 (one shown) in the apertures from being removed. The heads and nuts of the fasteners 300, 302, 304 pull inwardly against the members 296, 298 compressing the members against the elastomeric body 294.

Elongated members 296, 298 do not directly contact the hydraulic hoses supported in the apertures. The hydraulic hoses are supported in each aperture and are spaced apart from the rigid members such that they do not contact the rigid members during operation of vehicle 100. One hydraulic hose 130 of eight identical hydraulic hoses supported in the eight body apertures is shown in FIGURE 11.

Members 296, 298 are disposed in elongated grooves 348 formed in side walls 344, 346 in body 294. Each of grooves 348 defines two opposing shoulders that abut the outer edges of members 296, 298, thereby helping to orient the members over holes 324.

To assemble hydraulic hose retention device 292, the operator flexes slots 342 apart one-at-a-time. When each slot 342 is flexed open, the operator inserts a hose 130 through the slot and into its associated aperture in the body. Once all eight hoses are inserted into their apertures, the operator places each of the two members 296, 298 into their elongated slots 348 and inserts bolts through the now-aligned holes in the members and holes 324 in the body. The operator then places washers 312, 314, 316 over the bolts and threads nuts 318, 320,322 onto the ends of the bolts. The operator then tightens the nuts on the bolts to compress the elastomeric body 294. This prevents the hydraulic hoses 130 from sliding in body 294 and chafing.

The hydraulic hose retention device 292 may be used in place of retention device 138 in FIGURE 1 and is preferably oriented vertically in a two column by four row arrangement with each aperture 326, 328, 330, 332, 334, 336, 338, 340, surrounding and supporting a separate hydraulic hose 130.

It will be obvious to those skilled in the art that various changes may be made without departing from the scope of the invention, and the invention is not considered to be limited to what is illustrated in the drawings and described in the specification.

For example, the securing assembly need not be limited to the embodiments above, but may comprise a flexible band or rigid member, in one, two, three or more individual segments that are fastened together to extend about the periphery of the elastomeric body. The fasteners that fasten them together may comprise any combination of fasteners, which may be removable or fixed, and may include screws, bolts, nuts, rivets, welds, or adhesives.

## Claims

1. A hydraulic hose retention device (138, 238, 292) for retaining hydraulic hoses (130), comprising an elastomeric body (154, 254, 294) having first (164, 264) and second (166, 266) faces and at least one sidewall (162, 262, 344, 346), said body (154, 254, 294) defining a plurality of apertures (174, 176, 274, 326-340) configured to receive and support said hydraulic hoses (130), said plurality of apertures (174,176, 274, 326-340) extending between said first (164, 264) and second (166, 266) faces; and
**characterized in that** said body (154, 254, 294) further defines a plurality of slots (156, 256, 342) extending between said plurality of apertures (174,176, 274, 326-340) and said at least one sidewall (162, 262, 344, 346).

2. A hydraulic hose retention device (138, 238, 292) according to claim 1, **characterized in that** said slots (156, 256, 342) comprise opposing sides (178,180) which flex apart to insert said hydraulic hoses (130) one by one.

3. A hydraulic hose retention device (138, 238, 292) according to claim 1 or 2, **characterized in that** said device (138, 238, 292) further comprises a securing assembly (158, 258, 295) which includes one or more elongated members (159, 259, 261, 296, 298) and one or more fasteners (160, 269, 300, 302, 304).

4. A hydraulic hose retention device (138, 238, 292) according to claim 3, **characterized in that** said securing assembly (158, 258, 295) is fixed over said plurality of slots (156, 256, 342) to retain said hoses (130) in said plurality of apertures (174,176, 274, 326-340).

5. A hydraulic hose retention device (138, 238, 292) according to claim 3 or 4, **characterized in that** said at least one sidewall (162, 262, 344, 346) has a groove (168, 268, 348) to position said securing assembly (158, 258, 295).

6. A hydraulic hose retention device (138, 238) according to claim 3 to 5, **characterized in that** said one or more elongated members (159, 259, 261) includes one or more flexible bands that extend across said at least one side wall (162, 262) of said body (154, 254) and are secured together to form a continuous loop.

7. A hydraulic hose retention device (138, 238, 292) according to any of the preceding claims, **characterized in that** said plurality of slots (156, 256, 342) have a width of between 20% and 80% of the diameter of said plurality of apertures (174, 176, 274, 326-340).

8. A hydraulic hose retention device (138, 238, 292) according to any of the preceding claims, **characterized in that** said first (164, 264) and/or second (166, 266) face comprises a central recessed portion (182, 282).

9. A hydraulic hose retention device (138, 238, 292) according to any of the preceding claims, **characterized in that** said first (164, 264) and/or second (166, 266) face comprises a plurality of minor recesses (190, 290) in a peripheral region.

10. A hydraulic hose retention device (138, 238, 292) according to any of the preceding claims, **characterized in that** said body (154, 254, 294) and said at least one sidewall (162, 262, 344, 346) are circular or elongated and said plurality of slots (156, 256, 342) and said plurality of apertures (174, 176, 274, 326-340) are spaced evenly along said sidewall (162, 262, 344, 346).

11. A hydraulic hose retention device (292) according to any of the preceding claims, **characterized in that** said body (294) is elongated and said at least one sidewall (162) comprises two opposing sidewalls (344, 346) along which a plurality of slots (342) and a plurality of apertures (326-340) are disposed.

12. A hydraulic hose retention device (292) according to claim 11, **characterized in that** said elongated body (294) contains a plurality of elongated holes (324) to receive said one or more fasteners (300, 302, 304) to secure said one or more elongated members (296, 298).

13. A hydraulic hose retention device (138, 238, 292) according to any of the preceding claims, **characterized in that** said hydraulic hoses (130) extend between a tractor (102) and a swing tower (108) of a backhoe.

14. A hydraulic hose retention device (138, 238, 292) according to any of the preceding claims, **characterized in that** said body (154, 254, 294) has a durometer hardness of at least 50 and no more than 90.
